Europäisches Patentamt

European Patent Office

Office européen des brevets

(19)

(11) Veröffentlichungsnummer: **0 029 178**
**B1**

(12) **EUROPÄISCHE PATENTSCHRIFT**

(45) Veröffentlichungstag der Patentschrift: **28.12.83**

(51) Int. Cl.³: **G 01 F 23/16**

(21) Anmeldenummer: **80106820.6**

(22) Anmeldetag: **05.11.80**

(54) **Vorrichtung zur Füllstandsabtastung flüssiger Medien.**

(30) Priorität: **09.11.79 DE 2945341**

(43) Veröffentlichungstag der Anmeldung:
**27.05.81 Patentblatt 81/21**

(45) Bekanntmachung des Hinweises auf die Patenterteilung:
**28.12.83 Patentblatt 83/52**

(84) Benannte Vertragsstaaten:
**CH FR GB IT LI SE**

(56) Entgegenhaltungen:
**DE - A - 1 648 023**
**DE - A - 1 929 236**
**DE - A - 2 043 779**
**DE - A - 2 417 477**
**DE - B - 1 235 016**
**US - A - 3 444 737**
**US - A - 3 494 191**

(73) Patentinhaber: **SIEMENS AKTIENGESELLSCHAFT**
**Berlin und München Wittelsbacherplatz 2**
**D-8000 München 2 (DE)**

(72) Erfinder: **Heinzl, Alfred, Ing. grad.**
**Geigenberger Strasse 29**
**D-8000 München 71 (DE)**
Erfinder: **Stadler, Heinz**
**Mettnauer Strasse 19**
**D-8000 München 60 (DE)**

Courier Press, Leamington Spa, England.

Vorrichtung zur Füllstandsabtastung flüssiger Medien

Die Erfindung bezieht sich auf eine Vorrichtung zur Füllstandsabtastung flüssiger Medien mittels einer an eine Druckluftversorgung sowie an ein Staurohr angeschlossenen Abtastdüse, wobei das Staurohr mit einem Gehäuse in Verbindung steht, in welchem ein mittels des Staudrucks im Staurohr verstellbarer Kolben angeordnet ist, der bei vorgegebenem Kolbenhub einen Schalter betätigt.

Zur Messung des Füllstandes in Flüssigkeitsbehältern sind bereits verschiedene Methoden und Vorrichtungen bekannt. Die meisten dieser Methoden versagen jedoch dann, wenn der Füllstand flüssiger Medien in sehr kleinen Behältern abgetastet werden soll. Dieses Problem ergibt sich beispielsweise dann, wenn elektrische Bauelemente, wie Kleinrelais, in einem Gehäuse vergossen werden sollen. In diesen Fällen muß die Abtastung berührungslos erfolgen, da ansonsten die Verußmasse am Abtastwerkzeug anhärten würde. Außerdem muß eine Abtastung auch bei stark gekrümmten Oberflächen möglich sein, wie sie z.B. bei derartigen kleinen Bauteilen durch die Oberflächenspannung und Benetzung entstehen.

Eine berührungslose pneumatische Abtastung ist zwar an sich bereits bei festen Körpers bekannt, doch waren die bisherigen Abtastvorrichtungen nicht geeignet, beispielsweise beim Vergießen von Relais die automatische Abschaltung und Beendigung des Gießvorganges beim Erreichen des gewünschten Füllstandes zu gewährleisten. Insbesondere arbeiten die bekannten pneumatischen Abtastvorrichtungen mit einem relativ hohen Druck, wodurch der Abtastluftstrom einerseits die Flüssigkeitsoberfläche verändert und andererseits bei sehr dünnen Flüssigkeitsschichten keine Messung ermöglicht.

In der DE—A—16 48 023 ist eine Vorrichtung zur Füllstandsabtastung eines Leimpegels beschrieben, wobei eine Düse und ein Meßrohr verwendet werden. Das Meßrohr ist mit einem Stellzylinder verbunden, in welchem ein Kolben in Abhängigkeit vom Staudruck verstellt werden kann. Bei dem Kolben handelt es sich dort jedoch um einen Arbeitskolben, der über eine Kolbenstange auf ein Quetschventil wirkt, wozu auf den Kolben eine verhältnismäßig große Stellkraft ausgeübt werden muß. Da der Kolben nicht den ganzen Querschnitt des Gehäuses einnimmt, erfolgt dort im übrigen die eigentliche Betätigung über eine Schaltmembran, welche mit dem Kolben verbunden ist. Außerdem reicht dort auch der Staudruck nicht aus, um die Membran zu schalten und damit den Kolben zu betätigen; deshalb ist dort ein pneumatischer Verstärker zwischengeschaltet. Da es sich dort außerdem um ein geschlossenes System mit dem Membranschalter handelt, können auch Luftdruckschwankungen nicht ausgeglichen werden. Deswegen und wegen der benötigten hohen Schaltdrücke ist diese bekannte Vorrichtung zur Abtastung sehr dünner flüssiger Schichten nicht geeignet.

In der DE—A—19 29 236 ist außerdem ein pneumatischer oder hydraulischer Füllstandanzeiger beschrieben, der mit einem üblichen Membranschalter arbeitet und somit ebenfalls die erwähnten Nachteile aufweist.

Aufgabe der Erfindung ist es, eine Vorrichtung zur Füllstandsabtastung so auszubilden, daß sie bereits auf äußerst geringe Drücke anspricht, um auch sehr dünne flüssige Schichten abtasten zu können. Diese Aufgabe wird bei einer Vorrichtung der eingangs genannten Art dadurch gelöst, daß der Kolben dem Staudruck unmittelbar ausgesetzt und durch Federelemente im Gehäuse berührungsfrei gegenüber der Gehäusewandung verschiebbar gehalten ist und daß am Gehäuse als Schalter ein Annäherungsschalter vorgesehen ist.

Durch die erfindungsgemäße Gestaltung der Abtastvorrichtung ist es möglich, mit einem sehr geringen Druck in der Abtastdüse zu arbeiten, so daß die Flüssigkeitsoberfläche nicht beeinflußt wird. Mit dem berührungslos arbeitenden Annäherungsschalter wird gewährleistet, daß für den Schaltvorgang keine Kraft aufgebracht werden muß, welche einen erhöhten Druck in der Abtastung erfordern würde. Damit können auch sehr dünne Vergußmassenschichten von beispielsweise unter 0,3 mm abgetastet werden.

Um mit sehr kleinem Druck arbeiten zu können, ist es in weiterer Ausgestaltung der Erfindung zweckmäßig, den Kolben möglichst leicht zu gestalten; beispielsweise kann er als Hohlkörper aus dünnwandigem Blech gebildet sein. In einer besonders vorteilhaften Ausführungsform wird dieser Kolben im Gehäuse mit einer oder zwei Membranfedern so gehalten, daß er die Wandungen des Gehäuses nicht berührt. Er bewegt sich dann reibungsfrei und ist unempfindlich gegen klebrige Niederschläge von Vergußmassendämpfen, Staub und Lösungsmitteldämpfen. Diese Membranfedern können durch entsprechende Gestaltung, beispielsweise durch eine sehr weiche Federcharakteristik und durch Ausnehmungen bzw. Querschnittsverringerungen so gestaltet werden, daß die Vorspannung gegenüber dem Luftdruck äußerst gering ist. Es genügt also bereits ein sehr kleiner Überdruck, um den Kolben zu bewegen und den berührungslosen Schalter zu betätigen.

Anstelle der Halterung über Membranfedern kann aber auch eine Aufhängung des Kolbens im Gehäuse gewählt werden. So könnte er im Gehäuse geführt und über senkrecht wirkende Kompensationsfedern, etwa Schraubenfedern, aufgehängt sein. Der Annäherungsfühler kann an einer beliebigen Stelle im Gehäuse gegenüber dem Kolben sitzen.

Der berührungslos arbeitende Annäherungsschalter kann nach bekannten Prinzipien arbeiten, beispielsweise kapazitiv, elektrostatisch oder dergleichen. Derartige Schalter sind handelsüblich. Für die vorteilhafte Ausgestaltung der erfindungsgemäßen Abtastvorrichtung ist es jedoch zweckmäßig, wenn der Annäherungsschalter am Gehäuse befestigt ist und einen etwa stabförmig in den Kolben reichenden Annäherungsfühler besitzt. Bei Annäherung des Kolbenbodens an den Annäherungsfühler wird der Schalter betätift. In einer vorteilhaften Weiterbildung ist außerdem vorgesehen, daß der Abstand zwischen dem Annäherungsfühler und dem Kolben verstellbar ist. Dies kann beispielsweise mittels einer Einstellschraube geschehen, welche den Annäherungsfühler gegenüber dem Gehäuse verstellt und damit den Abstand zum Kolbenboden justiert. Auf diese Weise ist es möglich, ohne Verstellung der Abtastdüse denjenigen Füllstand zu justieren, bei dem der Annäherungsschalter ansprechen und beispielsweise den Gießvorgang abschalten soll.

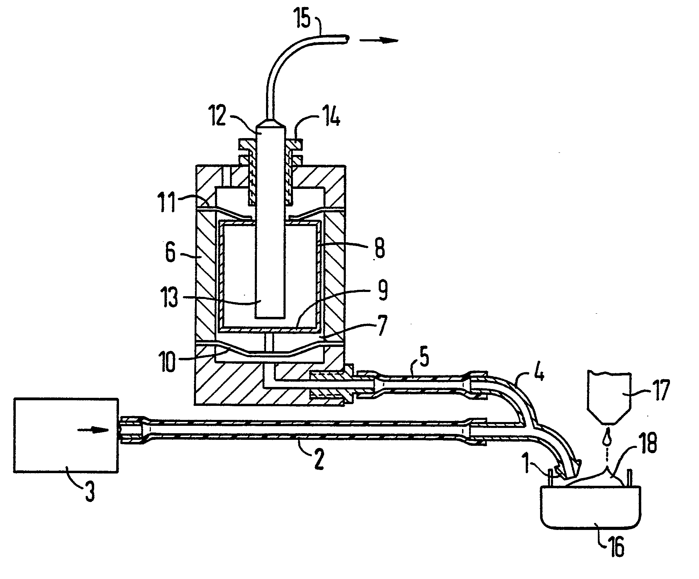

Die Erfindung wird nachfolgend an einem Ausführungsbeispiel anhand der Zeichnung näher erläutert.

Die Zeichnung zeigt eine pneumatische Abtastvorrichtung mit einer Abtastdüse 1, die über einen Schlauch 2 an eine Druckluftversorgung 3 angeschlossen ist. Weiterhin ist die Abtastdüse 1 mit einem Staurohr 4 verbunden, welches über einen Schlauch 5 in ein Gehäuse 6 mündet. Dieses Gehäuse enthält einen zylinderförmigen Hohlraum 7, in welchem ein Kolben 8 beweglich gelagert ist. Dieser Kolben 8 ist als dünnwandiger Hohlzylinder mit einem geschlossenen Boden 9 ausgestaltet und über zwei Membranfedern 10 und 11 so im Gehäuse 6 gehalten, daß er die Wandungen des Gehäuses nicht berührt. Durch entsprechende Gestaltung besitzen die Membranfedern eine gute Zentrierwirkung und eine sehr weiche Federcharakteristik.

Im Gehäuse 6 ist weiterhin ein berührungsloser Schalter 12 in Form eines stabförmigen Annäherungsfühlers konzentrisch zum Kolben 8 angeordnet. Durch eine Öffnung an der Oberseite des Kolbens ragt der Annäherungsfühler in den Kolbeninnenraum und besitzt mit seinem Ende 13 einen definierten Abstand zur Bodenfläche 9 des Kolbens. Durch eine Einstellschraube 14 kann der Annäherungsfühler in Axialrichtung und somit in seinem Abstand zum Kolbenboden 9 verstellt werden. Über eine Signalleitung 15 kann der Annäherungsschalter bei Betätigung ein Signal abgeben.

Zur Erläuterung der Funktion der erfindungsgemäßen Abtastvorrichtung ist das Vergießen eines elektrischen Bauelementes, beispielsweise eines Relais 16, dargestellt. Über einen nur andeutungsweise dargestellten Gießkopf 17 wird eine zähflüssige Vergußmasse 18 in das Relaisgehäuse eingefüllt. Gleichzeitig strömt durch die Abtastdüse 1 Luft mit einem vorgegebenen Druck aus. Nähert sich nun die Vergußmasse 18 der Abtastdüse, so entsteht ein Überdruck. Dieser wirkt über das Staurohr 4 und den Schlauch 5 auf den Kolben 8 und hebt ihn an. Dabei nähert sich der Kolbenboden 9 dem Ende 13 des Annäherungsschalters 12. Der Annäherungsschalter 12 schaltet bei einem bestimmten Druck und gibt ein Signal an das nicht dargestellte Gießkopfventil, welches dann die Zufuhr der Vergußmasse unterbricht.

Der Überdruck der aus der Abtastdüse strömenden Luft ist sehr gering, etwa in der Größenordnung von 50 $\mu$b, so daß die Vergußmasse nicht verdrängt wird. Das System arbeitet auch betriebssicher bei Luftdruckschwankungen und Druckstößen. Die Vorrichtung ist aber auch unempfindlich gegen klebrige Niederschläge und sonstige Verunreinigungen, da der Kolben reibungsfrei im Gehäuse gelagert ist. Natürlich ist die Verwendung der Abtastvorrichtung nicht auf die Abtastung von Gießharz gemäß dem beschriebenen Ausführungsbeispiel beschränkt.

**Patentansprüche**

1. Vorrichtung zur Füllstandsabtastung flüssiger Medien mittels einer an eine Druckluftversorgung (3) sowie an ein Staurohr (4) angeschlossenen Abtastdüse (1), wobei das Staurohr (4) mit einem Gehäuse (6) in Verbindung steht, in welchem ein mittels des Staudrucks im Staurohr (4) verstellbarer Kolben (8) angeordnet ist, der bei vorgegebenem Kolbenhub einen Schalter betätigt, dadurch gekennzeichnet, daß der Kolben (8) dem Staudruck unmittelbar ausgesetzt und durch Federelemente (10, 11) im Gehäuse (6) berührungsfrei gegenüber der Gehäusewandung verschiebbar gehalten ist und daß am Gehäuse (6) als Schalter ein Annäherungsschalter (12, 13) vorgesehen ist.

2. Vorichtung nach Anspruch 1, dadurch gekennzeichnet, daß der Kolben (8) ein aus dünnwandigem Blech gebildeter Hohlkörper ist.

3. Vorrichtung nach Anspruch 1 oder 2, dadurch gekennzeichnet, daß als Federelemente Membranfedern (10, 11) vorgesehen sind.

4. Vorrichtung nach Anspruch 1 oder 2, dadurch gekennzeichnet, daß der Kolben im Gehäuse (6) geführt und an einer oder mehreren Federn aufgehängt ist.

5. Vorrichtung nach einem der Ansprüche 2 bis 4, dadurch gekennzeichnet, daß der Annäherungsschalter (12) einen stabförmigen, in den Kolben (8) reichenden Annäherungsfühler (13) besitzt.

6. Vorrichtung nach einem der Ansprüche 1 bis 5, dadurch gekennzeichnet, daß der Annäherungsfühler (13) gegenüber dem Kolben (8) verstellbar ist.

7. Vorrichtung nach Anspruch 5 oder 6, dadurch gekennzeichnet, daß zur Einstellung des Annäherungsfühlers (13) eine Einstellschraube (14) vorgesehen ist.

**Revendications**

1. Dispositif de détection du niveau de milieux liquides au moyen d'une buse de détection (1) raccordée à une alimentation en air comprimé (3) ainsi qu'à un tube de pression dynamique (4), le tube de pression dynamique (4) communiquant avec un boîtier (6) dans lequel est disposé un piston (8) qui est susceptible d'être déplacé au moyen de la pression dynamique qui règne dans le tube de pression dynamique (4) et qui, pour une course prescrite, actionne un interrupteur, caractérisé en ce que le piston (8) est soumis directement à la pression dynamique et est maintenu sans contact dans le boîtier (6), avec possibilité de coulisser par rapport à la paroi du boîtier, par des éléments à ressort (10, 11) et en ce que sur le boîtier (6) est prévu, comme interrupteur, un interrupteur de proximité (12, 13).

2. Dispositif suivant la revendication 1, caractérisé en ce que le piston (8) est un corps creux formé de tôle à paroi mince.

3. Dispositif suivant la revendication 1 ou 2, caractérisé en ce que, comme élément à ressort, sont prévus des ressorts à membrane (10, 11).

4. Dispositif suivant la revendication 1 ou 2, caractérisé en ce que le piston est guidé dans le boîtier (6) et est suspendu à un ou à plusieurs ressorts.

5. Dispositif suivant l'une des revendications 2 à 4, caractérisé en ce que l'interrupteur de proximité (12) possède un détecteur de proximité (13) en forme de barrette pénétrant dans le piston (8).

6. Dispositif suivant l'une des revendications 1 à 5, caractérisé en ce que le détecteur de proximité (13) est réglable par rapport au piston (8).

7. Dispositif suivant la revendication 5 ou 6, caractérisé en ce que pour le réglage du détecteur de proximité (13) est prévue une vis de réglage (14).

**Claims**

1. Apparatus for the liquid level scanning of liquid media by means of a scanning nozzle (1) which is connected both to a compressed air supply (3) and to a pressure tube (4), the pressure tube (4) being connected to a housing (6), in which is arranged a piston (8), which is adjustable by means of the dynamic pressure in the pressure tube (4) and which actuates a switch at a predetermined piston stroke, characterised in that the piston (8) is directly exposed to the dynamic pressure and is held in the housing by spring elements (10, 11) so as to be displaceable without contacting the housing wall; and that as the switch, a proximity switch (12, 13) is arranged on the housing (6).

2. Apparatus according to Claim 1, characterised in that the piston (8) is a hollow body formed from thin metal sheet.

3. Apparatus according to Claim 1 or Claim 2, characterised in that diaphragms (10, 11) are provided as spring elements.

4. Apparatus according to Claim 1 or Claim 2, characterised in that the piston is guided in the housing (6) and suspended by one or more springs.

5. Apparatus according to one of Claims 2 to 4, characterised in that the proximity switch (12) has a rod-shaped proximity sensor (13) which extends into the piston (8).

6. Apparatus according to one of Claims 1 to 5, characterised in that the proximity sensor (13) is adjustable with respect to the piston (8).

7. Apparatus according to Claim 5 or Claim 6, characterised in that a setting screw (14) is provided for setting the proximity sensor (13).